# FASCICULE DE BREVET EUROPEEN

(11) **EP 1 378 398 B1**
(45) Date de publication et mention de la délivrance du brevet: **31.01.2007**
(21) Numéro de dépôt: 03291629.8
(22) Date de dépôt: 02.07.2003
(51) Int. Cl.: B60R 5/04

(54) **Vehicule automobile à plateau arrière et dispositif d'arrimage intégré**
Kraftfahrzeug mit rückwärtiger Plattform und integrierter Haltevorrichtung
Vehicle with rear side platform and integrated mooring device

(30) Priorité: 02.07.2002 FR 0208230
(43) Date de publication de la demande: 07.01.2004
(73) Titulaire: Renault s.a.s., 92100 Boulogne Billancourt (FR)
(72) Inventeur: Pierre, Bernard, 106-0031 Tokyo (JP); Pinol, Maxime, 92130 Issy Les Moulineaux (FR)

(56) Documents cités:
- EP-A- 1 215 107
- WO-A-96/07581
- DE-U- 9 305 958
- DE-U- 20 203 764
- DE-U- 29 614 667
- FR-A- 1 570 035
- FR-A- 2 796 033
- US-B1- 6 312 034

## Description

La présente invention concerne un véhicule automobile à plateau arrière comportant un dispositif d'arrimage intégré. Un tel véhicule est par exemple connu du document DE-U-296 14 667.

Afin de transporter, dans un véhicule automobile, des objets encombrants ne pouvant être logés dans une malle arrière du véhicule, même lorsque des sièges d'un banquette arrière sont rabattus, on prévoit en général des dispositifs d'arrimage amovibles, du type barres de toit disposées généralement sur le toit du véhicule, porte-bagages fixé sur le dessus d'une malle arrière, ou porte-vélo accroché à un hayon arrière du véhicule.

L'accrochage de ces dispositifs d'arrimage sur un véhicule automobile se fait de façon connue à l'aide de crochets ou de pinces serrés par des écrous. Des opérations d'accrochage de tels dispositifs d'arrimage sont fastidieuses et compliquées. En outre, il existe un risque qu'un dispositif d'arrimage soit mal fixé sur le véhicule et qu'il tombe pendant une phase de roulage du véhicule.

Par ailleurs, ces dispositifs d'arrimage, lorsqu'ils ne sont pas fixés sur le véhicule, doivent être stockés dans une malle arrière du véhicule ou dans un lieu approprié. Un dispositif d'arrimage stocké dans une malle du véhicule est encombrant et limite un volume de chargement de la malle. Le dispositif d'arrimage stocké dans un garage ne permet pas de disposer du dispositif d'arrimage à tout instant, lorsqu'un besoin imprévu apparaît.

La présente invention concerne un dispositif d'arrimage intégré pour véhicule automobile, permettant d'obvier aux inconvénients cités ci-dessus.

La présente invention a pour objet un véhicule automobile à plateau arrière comportant un dispositif d'arrimage intégré d'installation et d'utilisation simples, pouvant se ranger facilement, disponible à tout instant, et adapté pour le chargement de vélos.

Un tel dispositif d'arrimage intégré pour véhicule automobile à plateau arrière est défini à la revendication 1.

Lorsque le sabot n'est pas utilisé, le sabot est rentré en position escamotée, dans laquelle il ne gêne pas un chargement. Un stockage du sabot n'est pas nécessaire. Lorsqu'on doit charger un vélo, on déplace le sabot en position sortie en-dehors du plateau. Le sabot peut alors être utilisé pour supporter en partie ou complètement un vélo. Le sabot escamotable présent sur le plateau arrière est disponible à tout instant.

Dans un mode de réalisation, le sabot présente une cavité ouverte vers le haut lorsqu'il est en position sortie. Un tel sabot permet le logement d'une partie d'un vélo pour une meilleure fixation. Par exemple, la cavité ouverte du sabot peut être utilisée pour poser et bloquer dans une certaine mesure une roue de vélo.

Dans un mode de réalisation, un sabot est monté pivotant entre une position escamotée dans le bouclier arrière et une position sortie en porte-à-faux vers l'arrière du véhicule. Dans le cas d'un véhicule automobile à plateau arrière, le sabot en porte-à-faux vers l'arrière permet d'augmenter une longueur de chargement, ce qui facilite la fixation de vélos sur le plateau arrière du véhicule automobile.

Dans un mode de réalisation, le dispositif d'arrimage comprend un portillon de plateau arrière dont au moins une partie est rabattable vers l'avant. Un portillon arrière ferme généralement le plateau arrière du véhicule automobile pour retenir des objets chargés sur le plateau arrière. Lorsqu'un sabot de support est sorti pour augmenter une longueur de chargement, le portillon peut former un obstacle gênant le chargement et la fixation d'objets encombrants. Un portillon rabattable vers l'avant permet de ménager une ouverture arrière et de dégager un espace de chargement. La position rabattue vers l'avant permet de dégager une ouverture sans que le portillon ne reste en position ouverte.

Avantageusement, une partie rabattable du portillon s'escamote en position rabattue dans un dégagement d'un plancher du plateau arrière. Ainsi, la partie rabattable ne gêne pas le chargement d'objets sur un plancher du plateau arrière. De préférence, la partie rabattable prolonge un plancher de plateau arrière pour former une surface de chargement sensiblement plane.

Dans un mode de réalisation, une partie rabattable du portillon est solidaire d'un sabot. Ainsi, en rabattant la partie rabattable du portillon vers l'avant, on sort en même temps le sabot de support. On réduit ainsi des opérations de manipulation du sabot, et l'on peut également diminuer un nombre d'organes de blocage du sabot et du portillon prévus pour maintenir la partie du portillon et un sabot associé en positions respectivement rabattue et sortie.

Dans un mode de réalisation, un sabot de support est monté coulissant longitudinalement. Avantageusement, le sabot coulisse en position escamotée dans une aile arrière du véhicule automobile.

Dans un mode de réalisation, le dispositif d'arrimage comprend au moins une pince à deux mâchoires mobiles transversalement sur une traverse arrière d'une cabine du véhicule automobile. La pince à deux mâchoires mobiles permet de fixer des parties du vélo, et notamment de fixer une roue du vélo, dont une autre roue est logée dans un sabot de support. La fixation d'un vélo est simple. La fixation se fait en sortant un sabot de support, en posant une roue de vélo dans le sabot de support et en maintenant l'autre roue de vélo à l'aide de la pince.

La présente invention et ses avantages seront mieux compris à l'étude de la description détaillée de modes de réalisation pris à titre d'exemple nullement limitatif et illustrée par les dessins annexés, sur lesquels :
- la figure 1 est une vue de profil d'un véhicule automobile muni d'un dispositif d'arrimage intégré selon un aspect de l'invention, utilisé pour la fixation d'un vélo ;
- la figure 2 est une vue en perspective de trois quarts arrière partiel d'un plateau arrière du véhicule selon la figure 1 ; et
- la figure 3 est une vue de trois quarts arrière d'un véhicule automobile à plateau arrière muni d'un dispositif d'arrimage selon une variante.

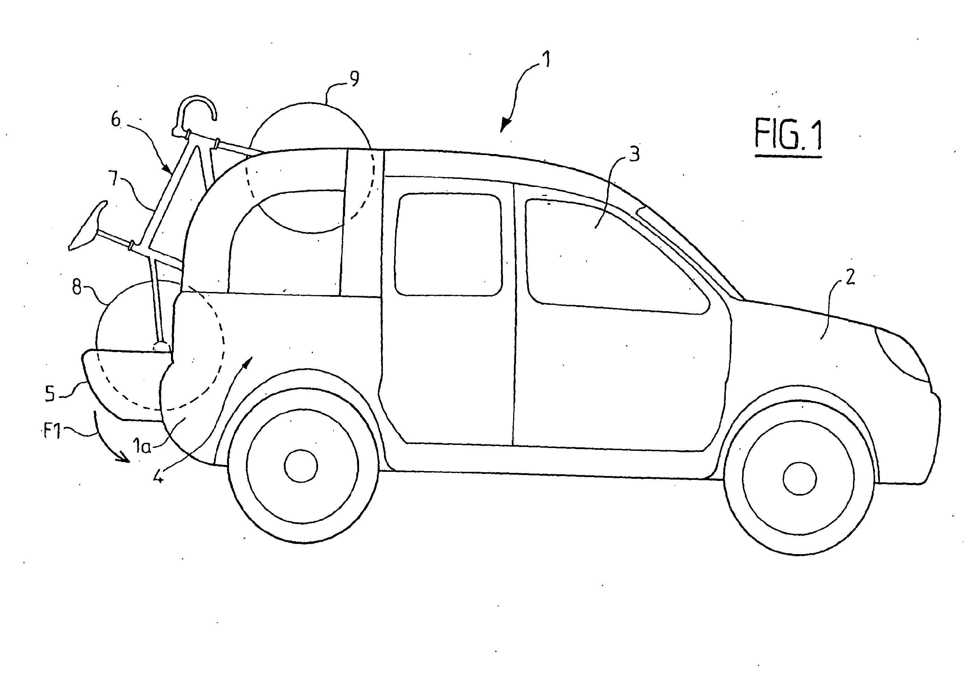

Sur la figure 1, un véhicule automobile référencé 1 dans son ensemble comprend un capot avant 2 pour le logement d'un moteur non représenté, une cabine de passagers 3, et un plateau arrière ouvert 4.

Le plateau arrière 4 comprend un sabot de support 5, représenté en position sortie, dans laquelle il vient en porte-à-faux à l'arrière du plateau 4. Un vélo 6 comprend un cadre 7, une première roue 8 logée dans le sabot 5, et une seconde roue 9 en appui sur une cloison de séparation du plateau arrière 4 et de la cabine 3.

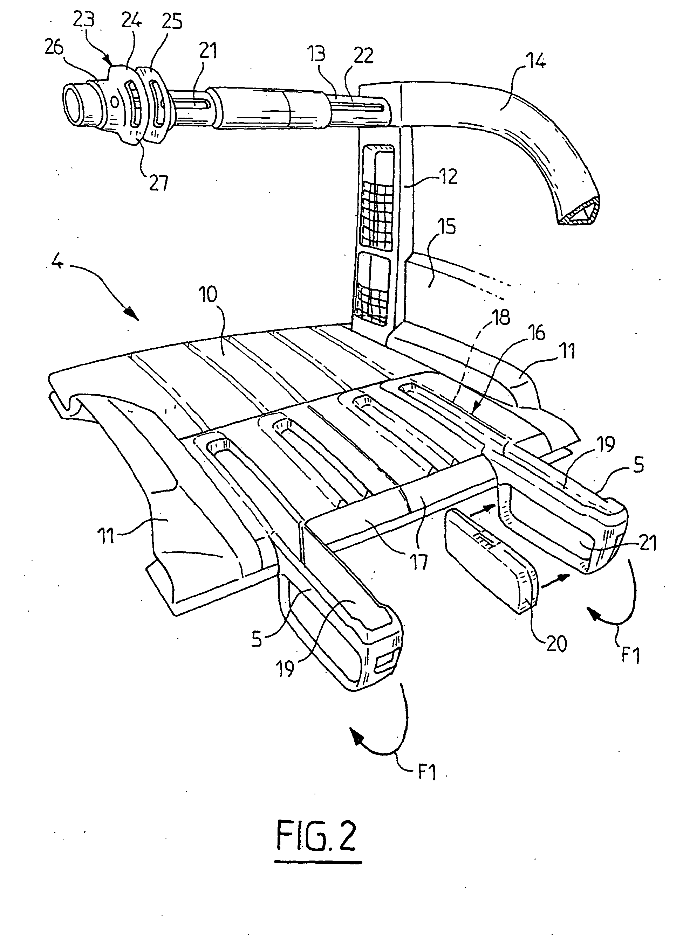

Comme on peut mieux le voir sur la figure 2, le plateau arrière 4 comprend un plancher 10 muni de bosses latérales 11 pour le passage de roues arrières, non représentées, sous le plancher 10. Le plateau arrière 4 comprend des montants 12 latéraux situés à l'avant et formant la structure arrière d'une cabine, seul un montant 12 étant représenté sur la figure 2, et une traverse 13 reliant les montants 12 par leurs extrémités supérieures. Une arche 14, sous la forme d'un élément tubulaire à section triangulaire, comprend une extrémité fixée sur une extrémité supérieure d'un montant 12, et une extrémité opposée, non représentée sur la figure 2, mais visible sur la figure 1, fixée à l'arrière du plateau 4, en venant à l'aplomb d'une extrémité arrière du véhicule 1. La traverse 13, les montants 12 et l'arche 14 forment des éléments de structure du véhicule automobile. Le montant 12 peut servir de support à une cloison arrière, non représentée, servant de séparation entre la cabine 3 et le plateau 4.

Le plateau arrière 4 comprend des cloisons latérales 15, dont une seule est représentée en partie sur la figure 2, et un portillon arrière rabattable 16 comportant des parties séparées indépendantes 17, ici au nombre de deux, disposées l'une à côté de l'autre. Les parties 17 du portillon 16 sont représentées en position rabattue vers l'avant, dans laquelle les parties 17 viennent se loger dans des dégagements 18 ménagés dans le plancher 10, les surfaces des parties 17 orientées vers le haut dans cette position prolongeant le plancher 10 du plateau arrière 4 pour former une surface de chargement sensiblement plane.

Des sabots 5, représentés en position sortie, présentent une forme générale extérieure parallélépipédique et sont pourvus de cavités 19 ouvertes vers le haut dans cette position sortie. Les sabots 5 s'étendent sensiblement horizontalement en position sortie.

Tels que représentés sur la figure 2, les sabots 5 sont solidaires des parties 17 du portillon 16. Plus particulièrement, les sabots 5 sont monoblocs avec les parties 17.

Un conteneur 20 amovible peut être fixé sur une paroi latérale d'un sabot 5. Le conteneur 20 présente une forme en concordance avec une cavité latérale 21 formée sur un côté du sabot 5.

La traverse 13 comprend des gorges longitudinales 22 s'étendant sensiblement en alignement avec les sabots 5 selon un axe longitudinal du véhicule. Des pinces amovibles 23 peuvent être fixées sur la travers 13, en étant montées mobiles transversalement dans les gorges 22. Une pince 23 comprend deux mâchoires 24, 25, coulissant dans une gorge 22. Une mâchoire 24, 25 comprend un manchon 26 pour guider son coulissement sur la traverse 13, et une palette de serrage radiale 27 s'étendant à partir d'une extrémité du manchon 26, une palette 27 étant destinée à venir en appui sur un vélo à fixer. Une palette 27 comprend avantageusement une ouverture permettant par exemple le passage d'une sangle de fixation. Les mâchoires 24, 25 sont disposées sur la traverse 13, de façon que leurs palettes 27 se situent en regard l'une de l'autre.

Des évidements sont encore prévus dans le montant 12 pour permettre le logement d'objets peu encombrants. Les évidements sont munis de filets de retenue.

En position horizontale sortie, les sabots 5 s'étendent en porte-à-faux à l'arrière du véhicule. Les sabots 5 sont montés mobiles en rotation, à l'aide de moyens non représentés, selon les flèches F1, pour être rabattus vers le bas en position verticale escamotée dans un bouclier arrière 1a (fig. 1) du véhicule automobile 1.

Les parties 17 du portillon 16 sont mobiles entre leur position horizontale rabattue escamotée dans le plancher 10 et une position relevée verticale de fermeture arrière du plateau arrière 4.

Les sabots 5 et les parties 17 sont situés de part et d'autre d'un axe de rotation horizontal transversal au véhicule, définis par des moyens de fixation des sabots 5 et des parties 17 non représentés. Les parties 17 étant solidaires des sabots 5, le fait de rabattre vers l'avant une partie 17 du portillon provoque simultanément la sortie du sabot 5 associé qui se lève vers l'arrière pour venir en position horizontale depuis sa position verticale escamotée.

Bien entendu, on prévoit des moyens de blocages des ensembles partie 17/sabots 5, afin de les bloquer dans leurs différentes positions correspondant à la position sortie et la position escamotée des sabots 5. On peut prévoir par exemple des moyens d'encliquetage, ou des ensembles pêne/gâche.

Pour charger un vélo sur le plateau arrière 4 du véhicule 1, on rabat une partie 17 du portillon 16 vers l'avant, tout en sortant le sabot 5 associé. On pose une roue arrière du vélo dans un sabot 5, puis on place une roue avant en appui sur la traverse 13. Ensuite, on place les mâchoires 24, 25 d'une pince 23 de part et d'autre de la roue, on rapproche ces mâchoires 24, 25 de façon à serrer la roue et on bloque les mâchoires 24, 25, par exemple à l'aide de moyens de serrage du type vis/écrou, pour empêcher un déplacement ultérieur. Le vélo 7 (fig. 1) se situe alors dans la position illustrée par la figure 1.

Le portillon 16 séparé en parties 17 offre l'opportunité de ne rabattre qu'une seule partie 17 si un seul vélo doit être fixé sur le plateau arrière 4 du véhicule 1. Dans ce cas, l'autre partie 17 en position relevée sert à retenir éventuellement des objets posés sur le plancher 10 du plateau arrière 4.

On a décrit dans ce mode de réalisation des sabots 5 solidaires des parties 17 du portillon arrière 16. Dans une variante, on prévoit qu'un sabot 5 peut être rentré ou sorti, indépendamment d'une partie du portillon 16. En outre, on comprend qu'un portillon 16 non rabattable peut éventuellement gêner le chargement d'un vélo à l'aide d'un sabot 5. Un portillon rabattable permet d'éviter cet inconvénient. Bien entendu, selon les dimensions du véhicule et d'un portillon ou des sabots, on peut néanmoins prévoir un portillon 16 qui ne soit pas rabattable. Les sabots 5 sont, dans ce cas, mobiles indépendamment du portillon.

Par ailleurs, bien que l'on ait décrit un portillon 16 comprenant deux parties rabattables indépendamment, on peut bien entendu prévoir un portillon 16 monobloc.

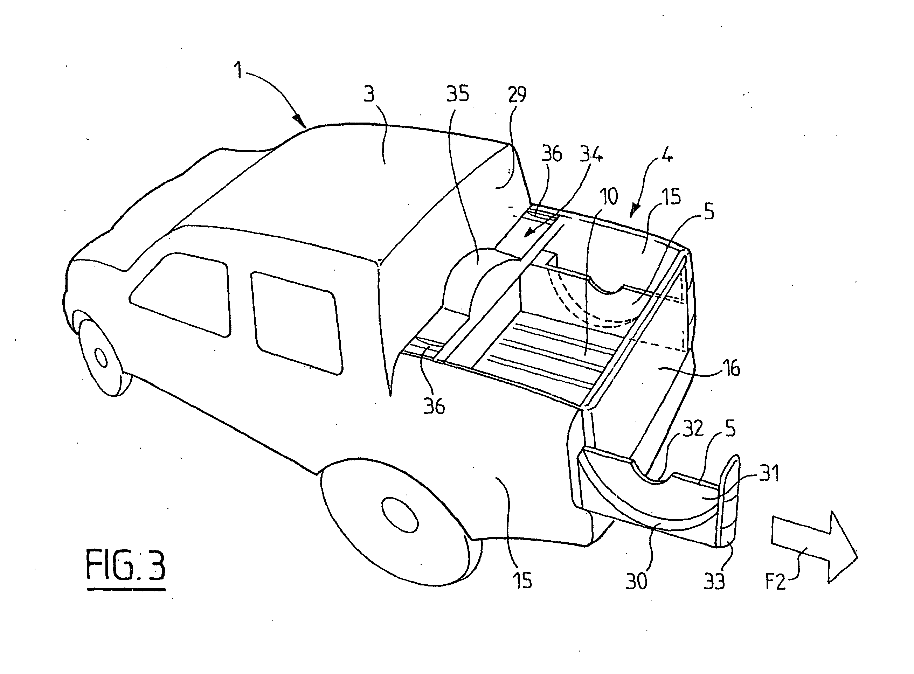

Sur la figure 3, où les références aux éléments semblables à ceux des figures 1 et 2 ont été reprises, un véhicule automobile 1 comprend un plateau arrière 4 muni de cloisons latérales 15 formant les ailes arrière du véhicule 1, un portillon arrière monobloc 16 et une cloison 29 de séparation du plateau arrière 4 et d'une cabine de passager 3, et un plancher 10.

Le plateau arrière 4 comprend des sabots 5, montés coulissants selon un axe longitudinal du véhicule entre une position escamotée dans les ailes 15 et une position sortie en porte-à-faux vers l'arrière du véhicule. Un premier sabot 5 est représenté en position rentrée. L'autre sabot 5 est représenté en position sortie.

Un sabot 5 présente un logement ouvert latéralement formé par une surface d'appui vertical 30, qui est une portion de surface cylindrique d'axe transversal au véhicule et ouverte vers le haut, et une paroi latérale verticale 31, parallèle à la direction longitudinale du véhicule 1 et munie sur son bord supérieur d'un dégagement central 32. La paroi latérale 31 ferme le logement d'un côté du sabot 5, l'autre côté étant ouvert. Un sabot 5 comprend à son extrémité arrière un bloc optique 33 prévu pour les feux de recul de croisement et de freinage.

Un sabot 5 est monté coulissant longitudinalement entre une position escamotée dans une aile 15 et une position sortie en porte-à-faux à l'arrière du plateau arrière 4. Bien entendu, une aile 15 présente une cavité prévue pour le logement d'un sabot 5 en position escamotée. Un sabot 5 peut être monté coulissant de façon connue dans le domaine des ouvrants à l'aide de rails logés dans l'aile 15 et de galets de roulement. Des moyens de blocage axial sont prévus pour maintenir le sabot 5 en position sortie ou en position escamotée.

Le sabot 5 est prévu pour la fixation d'une roue de vélo. Pour ce faire, le sabot 5 est coulissé dans le sens indiqué par la flèche F2 pour venir en position. Une roue de vélo est posée sur la surface d'appui 30, éventuellement en venant en appui latéralement contre la paroi 31. L'évidemment 32 facilite le passage d'un dérailleur fixé sur une roue arrière de vélo.

Lorsqu'un sabot 5 est en position rentrée, dans laquelle, après un coulissement longitudinal, il est escamoté dans une aile arrière 15, la paroi latérale 31 forme une paroi de bord du plancher 4 sur laquelle des éléments disposés dans le plateau arrière 4 peuvent venir en appui.

Un capot 34 est prévu pour être posé en appui sur les ailes arrière 15 du véhicule 1 en recouvrant en totalité ou en partie le plateau arrière 4. Le capot 31 comprend une bosse centrale formant une cavité orientée vers le bas, par exemple pour la fixation d'une roue de secours sur le plateau arrière 4. Le capot 34 comprend encore des dépressions 36 à ses extrémités latérales, lesdites dépressions 36 venant en alignement longitudinal avec les sabots 5.

Pour la fixation d'un vélo, on pourra ainsi prévoir qu'une roue arrière soit posée et fixée sur un sabot 5 et que la roue avant vienne reposer dans les dépressions 36 pour améliorer sa stabilité et son maintien.

Grâce à l'invention, on obtient des dispositifs d'arrimage intégrés à un plateau arrière du véhicule, pouvant être escamotés et sortis facilement, de sorte qu'ils sont disponibles à tout instant pour la fixation de vélos. Les dispositifs d'arrimage escamotables ne doivent pas être stockés ou démontés.

## Revendications

1. Véhicule automobile à plateau arrière (4) comportant un dispositif d'arrimage intégré pour la fixation d'un vélo (6) selon une direction longitudinale du véhicule, ledit dispositif d'arrimage comprenant un sabot (5) de support destiné à venir se fixer sur le plateau arrière (4) du véhicule, **caractérisé par le fait que**, le sabot (5) est monté mobile par rapport au plateau (4), le dispositif d'arrimage étant apte à occuper une première position dans laquelle le sabot (5) de support est escamoté soit dans un plancher (10) du plateau arrière (4) soit dans une aile arrière (15) ou dans un bouclier arrière (1a) du véhicule et une deuxième position dans laquelle le sabot (5) est en position sortie et s'étend au moins en partie en dehors du plateau arrière (4) de manière à recevoir une première roue (8) du vélo, la deuxième roue (9) étant en appui contre une traverse supérieure arrière (13) de la cabine (3) du véhicule automobile.

2. Véhicule selon la revendication 1, **caractérisé par le fait que** le sabot (5) présente une cavité ouverte vers le haut lorsqu'il est en position sortie.

3. Véhicule selon l'une quelconque des revendications 1 ou 2, **caractérisé par le fait que** le sabot (5) est monté pivotant entre ladite position escamotée dans le bouclier (1a) arrière et une position sortie en porte-à-faux vers l'arrière du véhicule.

4. Véhicule selon l'une quelconque des revendications précédentes, **caractérisé par le fait qu'**il comprend un portillon (16) de plateau arrière dont au moins une partie (17) est rabattable vers l'avant.

5. Véhicule selon la revendication 4, **caractérisé par le fait que** ladite au moins une partie rabattable (17) du portillon (16) s'escamote en position rabattue dans un dégagement (18) d'un plancher (10) du plateau arrière (4).

6. Véhicule selon l'une quelconque des revendications 4 ou 5, **caractérisé par le fait que** ladite au moins une partie rabattable (17) du portillon (16) est solidaire d'un sabot (5).

7. Véhicule selon l'une quelconque des revendications 1 ou 2, **caractérisé par le fait que** le sabot (5) de support est monté coulissant longitudinalement.

8. Véhicule selon la revendication 7, **caractérisé par le fait que** le sabot (5) coulisse en position escamotée dans ladite aile arrière (15) du véhicule automobile.

9. Véhicule selon l'une quelconque des revendications précédentes, **caractérisé par le fait qu**'il comprend au moins une pince (23) à deux mâchoires (24 25) mobiles transversalement sur ladite traverse supérieure arrière (13) de la cabine (3) du véhicule automobile.

## Claims

1. Motor vehicle with a rear platform (4) comprising an integrated securing device for fastening a bicycle (6) in a longitudinal direction of the vehicle, the said securing device comprising a support shoe (5) intended to be fastened to the rear platform (4) of the vehicle, **characterized in that** the shoe (5) is mounted so that it can move relative to the platform (4), the securing device being designed to occupy a first position in which the support shoe (5) is retracted either into a floor (10) of the rear platform (4) or into a rear wing (15), or into a rear shield (1a) of the vehicle, and a second position in which the shoe (5) is in an extended position and extends at least partly outside the rear platform (4) so as to receive a first wheel (8) of the bicycle, the second wheel (9) bearing against a rear upper crossbar (13) of the motor vehicle cabin (3).

2. Vehicle according to Claim 1, **characterized in that** the shoe (5) has a cavity which is open to the top when this shoe is in the extended position.

3. Vehicle according to either one of Claims 1 and 2, **characterized in that** the shoe (5) is mounted so that it can pivot between the said retracted position in the rear shield (1a) and an extended position in which it juts out towards the rear of the vehicle.

4. Vehicle according to any one of the preceding claims, **characterized in that** it comprises a rear platform hatch (16) having at least one part (17) which can be folded towards the front.

5. Vehicle according to Claim 4, **characterized in that**, when in the folded position, the said at least one foldable part (17) of the hatch (16) retracts into a clearance (18) in a floor (10) of the rear platform (4).

6. Vehicle according to either one of Claims 4 and 5, **characterized in that** the said at least one foldable part (17) of the hatch (16) is rigidly connected to a shoe (5).

7. Vehicle according to either one of Claims 1 and 2, **characterized in that** the support shoe (5) is mounted so that it can slide longitudinally.

8. Vehicle according to Claim 7, **characterized in that**, when in the retracted position, the shoe (5) slides into the said rear wing (15) of the motor vehicle.

9. Vehicle according to any one of the preceding claims, **characterized in that** it comprises at least one clamp (23) with two jaws (24, 25) which can move transversely along the said rear upper crossbar (13) of the motor vehicle cabin (3).

## Patentansprüche

1. Kraftfahrzeug mit rückwärtiger Plattform (4), umfassend eine integrierte Haltevorrichtung für die Befestigung eines Fahrrads (6) in einer Längsrichtung des Fahrzeugs, wobei die Haltevorrichtung einen Stützrahmen (5) umfasst, der dazu bestimmt ist, auf der rückwärtigen Plattform (4) des Fahrzeugs befestigt zu werden, **dadurch gekennzeichnet, dass** der Rahmen (5) in Bezug auf die Plattform (4) beweglich befestigt ist, wobei die Haltevorrichtung eine erste Position, in der der Stützrahmen (5) entweder in einen Boden (10) der rückwärtigen Plattform (4) oder in einen rückwärtigen Kotflügel (15) oder in einen rückwärtigen Stoßfänger (1a) des Fahrzeugs eingezogen ist, und eine zweite Position einnehmen kann, in der der Rahmen (5) in einer ausgefahrenen Position ist und sich zumindest teilweise über die rückwärtige Plattform (4) hinaus erstreckt, um ein erstes Rad (8) des Fahrrads aufzunehmen, wobei das zweite Rad (9) an einer oberen hinteren Querstrebe (13) des Fahrgastraums (3) des Kraftfahrzeugs anliegt.

2. Fahrzeug nach Anspruch 1, **dadurch gekennzeichnet, dass** der Rahmen (5) einen nach oben offenen Hohlraum aufweist, wenn er in der ausgefahrenen Position ist.

3. Fahrzeug nach einem der Ansprüche 1 oder 2, **dadurch gekennzeichnet, dass** der Rahmen (5) schwenkbar zwischen der in den rückwärtigen Stoßfänger (1a) eingezogenen und einer nach hinten über das Fahrzeug hinausragenden ausgefahrenen Position montiert ist.

4. Fahrzeug nach einem der vorhergehenden Ansprüche, **dadurch gekennzeichnet, dass** es eine Tür (16) der rückwärtigen Plattform umfasst, die mindestens zum Teil (17) nach vorne aufklappbar ist.

5. Fahrzeug nach Anspruch 4, **dadurch gekennzeichnet, dass** der mindestens eine aufklappbare Teil (17) der Tür (16) in umgelegter Position in eine Aussparung (18) eines Bodens (10) der rückwärtigen Plattform (4) eingezogen wird.

6. Fahrzeug nach einem der Ansprüche 4 oder 5, **dadurch gekennzeichnet, dass** der mindestens eine aufklappbare Teil (17) der Tür (16) mit einem Rahmen (5) verbunden ist.

7. Fahrzeug nach einem der Ansprüche 1 oder 2, **dadurch gekennzeichnet, dass** der Stützrahmen (5) längs gleitend montiert ist.

8. Fahrzeug nach Anspruch 7, **dadurch gekennzeichnet, dass** der Rahmen (5) in eingezogener Position in dem rückwärtigen Kotflügel (15) des Kraftfahrzeugs gleitet.

9. Fahrzeug nach einem der vorhergehenden Ansprüche, **dadurch gekennzeichnet, dass** es mindestens eine Klemme (23) mit zwei Klemmbacken (24, 25), die quer auf der oberen hinteren Querstrebe (13) des Fahrgastraums (3) des Kraftfahrzeugs beweglich sind, umfasst.
